# EUROPÄISCHE PATENTSCHRIFT

(11) **EP 1 192 866 B1**
(45) Veröffentlichungstag und Bekanntmachung des Hinweises auf die Patenterteilung: **26.07.2006**
(21) Anmeldenummer: 01117894.4
(22) Anmeldetag: 24.07.2001
(51) Int. Cl.: A23L 3/02, A23L 3/10, A23L 3/04, B65B 55/10, B65B 55/18, A61L 2/00, A61L 2/26

(54) **Pasteurisierungsanlage**
Pasteurisation machine
Installation de pasteurisation

(30) Priorität: 30.08.2000 DE 10042528
(43) Veröffentlichungstag der Anmeldung: 03.04.2002
(73) Patentinhaber: KHS AG, 44143 Dortmund (DE)
(72) Erfinder: Wiedemann, Ulrich, 44135 Dortmund (DE)

(56) Entgegenhaltungen:
- EP-A- 0 249 323
- EP-A- 0 430 907
- EP-A- 0 598 458
- EP-A- 0 960 574
- CA-A- 2 299 082
- DE-U- 29 716 644
- US-A- 3 813 895
- US-A- 4 441 406
- US-A- 4 476 809
- US-A- 4 688 476
- US-A- 4 727 800
- US-A- 5 044 267
- DATABASE WPI Section PQ, Week 199412 Derwent Publications Ltd., London, GB; Class P14, AN 1994-098696 XP002246147 -& SU 1 790 366 A (FINE BIOLOG EQUIP CONS BUR), 23. Januar 1993 (1993-01-23)

## Beschreibung

Die Erfindung bezieht sich auf eine Pasteurisierungsanlage zum Pasteurisieren von Produkten in Behältern gemäß Oberbegriff des Anspruchs 1.

In der Getränkeindustrie ist es insbesondere bei leicht verderblichen Gütern üblich, diese zu pasteurisieren. Bei bekannten Pasteurisierungsanlagen werden dabei die Behälter mit den Produkten in praktisch gleichmäßiger Bewegung vom Eingangsbereich zum Ausgangsbereich gefördert. Während dieser Bewegung werden sie aufgeheizt, bis sie die gewünschten Pasteurisierungseinheiten aufgenommen haben, danach gekühlt, womit der Pasteurisierungsvorgang beendet ist. Ein dazu vorgesehener Pasteurisierungstunnel hat demzufolge einen Aufheizabschnitt, einen Überhitzungs- und Pasteurisierungsabschnitt mit einem nachfolgenden Abkühlabschnitt. Die einzelnen Abschnitte können weitere Unterzonen aufweisen. Die dadurch sichergestellte allmähliche Aufheizung und Abkühlung wird insbesondere bei in der Getränkeindustrie verwendeten Glasflaschen vorgezogen, um durch abrupte Temperaturänderungen ein Zerstören der Glasflaschen zu vermeiden. Die Wärmeübertragung auf das in den Behältern enthaltene Produkt geschieht normalerweise durch Besprühen dieser Behälter mit Wasser, die auf einem Förderband, welches die Sprühflüssigkeit nach unten durchtreten läßt, fortbewegt werden. Unter dem Förderband sind Auffangbehälter für die Sprühflüssigkeit angebracht, aus denen die Pumpen für die Besprühung gespeist werden. Zwischen den aufzuheizenden und abzukühlenden Abschnitten kann mit der Sprühflüssigkeit zonenweise Wärme ausgetauscht werden.

Um eine optimale Abstufung der Temperaturen in den einzelnen Abschnitten erreichen zu können, sind diese entsprechend unterteilt. Meist weist der Abschnitt "Aufheizen" drei bis vier einzelne Zonen auf, das Pasteurisierungsgebiet zwei oder drei Zonen, wobei noch eine Überhitzungszone vor der Pasteurisierungszone vorgesehen sein kann. Der anschließende Abschnitt "Abkühlen" weist wiederum drei bis vier Einzelzonen auf, in welchen die Behälter durch eine schrittweise abnehmende Temperatur der Sprühflüssigkeit bis zur gewünschten Ausgangstemperatur abgekühlt werden.

Die jeweils eingestellten Sprühtemperaturen sind genau dem Produkt, den Längen der Zonen und der Geschwindigkeit des Transporteurs angepaßt, damit sichergestellt ist, daß das in den Behältern befindliche Produkt den vorgeschriebenen Pasteurisierungsgrad erreicht.

Zum Besprühen der Behälter sind in dem Pasteurgehäuse quer zur Förderrichtung eine Vielzahl nebeneinander auf Abstand gehaltene Sprührohre mit Sprühdüsen oder Sprühöffnungen und einem seitlichen Flüssigkeitszulauf vorgesehen. Sprührohre dieser Art sind beispielsweise aus der DE 297166 44 US-A-3 813 895, CA-A-2299082, US-A-4727800, SU-A-1 790366, EP-A-0430907 und US-A-4476809 bekannt. Derartige Sprührohe müssen, um eine gleichmäßige Beaufschlagung sicherzustellen, in regelmäßigen Abständen gereinigt werden. Je nach Anordnung und Einbaulage solcher Sprührohre sind die im Mittenbereich einer Anlage befindlichen Sprühdüsen kaum einsehbar, so daß zu deren Überprüfung häufig der komplette Ausbau der Spritzrohre erforderlich wird. US-A-4688476 offenbart eine Anlage zum Behandeln von Lebensmitteln und US-A-5044267 offenbart einen Tunnel zum Abkühlen, trhitzen und Trocknen von Lebensmitteln. Der Erfindung liegt die Aufgabe zugrunde, eine Pasteurisationsanlage vorzuschlagen, mit welcher unter Minimierung des Reinigungsaufwandes eine einfache Überprüfung und Reinigung solcher Sprüheinrichtungen gegeben ist.

Diese Aufgabe wird bei einer Vorrichtung der eingangs genannten Art dadurch gelöst, daß das Dach des Pasteurgehäuses als Spritzdach ausgebildet ist und sowohl das Dach und auch die Spritzeinrichtungen bildet.

Ferner wird in selbständiger Ausbildung vorgeschlagen, daß das Dach als nebeneinander ausgeformte Sprühkanäle ausgebildet ist.

Weitere Merkmale der Erfindung ergehen aus den Unteransprüchen.

Mit der erfindungsgemäßen Ausgestaltung ist eine einfache und sichere Kontrolle über die Wirksamkeit und Verschmutzung solcher Sprühdüsen oder Sprühöffnungen gegeben. Durch einfaches Öffnen des Oberteils ist sofort der komplette Spritzraum sichtbar und kann mit einfachen Mitteln unmittelbar gesäubert werden. Darüber hinaus entfällt die sonst übliche Dachkonstruktion, so daß neben den vorgenannten

Vorteilen eine wesentlich leichtere und kostengünstigere Bauweise erzielt werden kann.

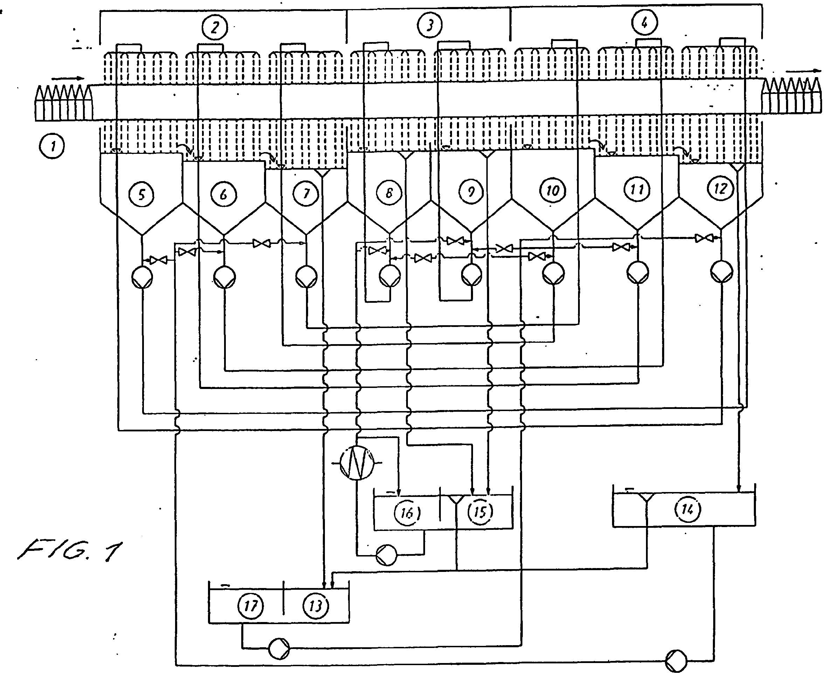

Im nachfolgenden wird die Erfindung anhand einer ein Ausführungsbeispiel darstellenden Zeichnung mit den Figuren 1, 2 und 3 näher erläutert.

Wie aus Figur 1 ersichtlich, besteht die Pasteurisierungsanlage aus einem in Durchlaufrichtung der jeweiligen Behälter 1 im Anfangsbereich angeordneten Aufwärmabschnitt 2, der wiederum aus einer Vielzahl von Einzelzonen 5-7 bestehen kann, wobei die Aufwärmphase entsprechend schonend vorgenommen wird. Diesem Aufwärmabschnitt 2 schließt sich eine Überhitzungszone 8 an, dieser folgt die eigentliche Pasteurisierzone 9. Anschließend beginnt der Bereich des Abkühlabschnitts 4, der, wie auch bei den anderen Abschnitten, aus einer größeren Anzahl von Einzelzonen 10-12 bestehen kann.

Das Betriebsprogramm einer solchen Pasteurisierungsanlage wird zunächst für den Pasteurisierungsbetrieb unter optimalen Bedingungen ausgelegt. So ist beispielsweise vorgesehen, daß die erste Aufwärmzone 5 eine Besprühungstemperatur von 18°C aufweist. Entsprechend ist die Ausgangstemperatur der pasteurisierten Produkte mit einer Besprühungstemperatur von etwa 17°C vorgesehen. Die zweite Aufwärmzone 6 weist eine Besprühungstemperatur von geringfügig oberhalb 24°C auf, wobei die damit kommunizierende Abkühlzone wiederum etwas geringer bei 23°C liegen kann. Am Beispiel dieser beiden Zonen ist erkennbar, daß das Wasser aus den Zonen "Abkühlen" 4 jeweils der Zone im Abschnitt "Aufwärmen" 2 zugeleitet wird, deren gewollte Aufheiztemperatur der gewollten Abkühltemperatur am nächsten kommt. Zur Ausgleichung der jeweiligen Temperaturdifferenz wird dem Wasser aus dem Abkühlabschnitt 4 vorzugsweise Wasser aus dem ersten Tank 13 in geringfügigen Mengen zugegeben, dessen Wasser höherer Temperatur aus der letzten Station 7 des Aufwärmabschnitts 2 stammt. Im Anschluß an diesen Aufwärm-abschnitt befindet sich die Überhitzungszone 8, deren Temperatur wiederum höher als die der Temperatur der letzten Aufwärmzone 7 ist und aus einem zweiten Behälter 15 mit gegenüber dem ersten Behälter 13 höhere Temperatur gespeist wird. Dem zweiten Behälter 15 ist ein dritter Behälter 16 zugeordnet, dem das Überschußwasser des Behälters 15 zugeleitet wird. Dieser dritte Behälter 16 wird zudem mittels einer Aufheizeinrichtung auf einer vorbestimmbaren höheren Temperatur gehalten. Aus diesem Behälter 16 wird auch die Überhitzungs- und Pasteurisierungszone 8, 9 beaufschlagt, wobei die ablaufende heiße Wassermenge in dem zweiten Behälter 15 gesammelt und mit dem Heißwasser des dritten Behälters 16 vermischt wird.

Bei einer auftretenden Störung, beispielsweise hervorgerufen durch einen Behälterrückstau in der Pasteurisierungsanlage, wird durch eine nicht weiter dargestellte Steuereinrichtung eine sofortige Ansteuerung bestimmter Ventile vorgenommen, so daß beispielsweise das Wasser geringerer Temperatur aus dem ersten Behälter 13 der Überhitzungs- und/oder Pasteurisierungszone 8, 9 zugeführt wird. Den anderen Abschnitten 2, 4 kann ebenfalls Wasser geringerer Temperatur, beispielsweise aus einem weiteren vierten Behälter 14 zugegeben werden.

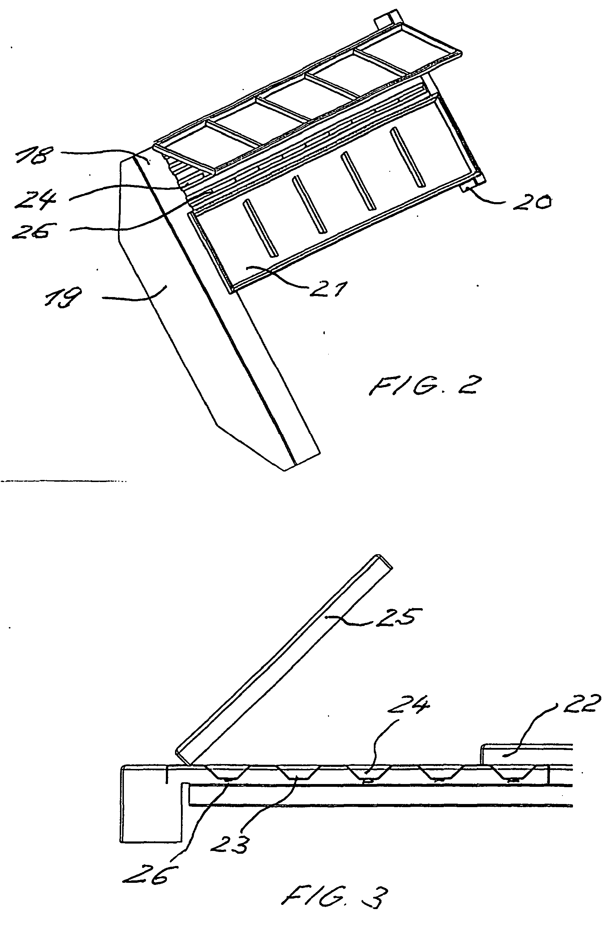

Gemäß Figur 2 weist die Pasteurisierungsanlage ein Gehäuse 18 mit allseitig umschließenden Seiten- und Bodenwänden auf, wobei die Seitenwände 19,20 zur Aufnahme der als Dach 21 ausgebildeten Spritzeinheiten 22 dienen. Diese dienen zum einen als Dachabdeckungen für das Gehäuse 18 und zum anderen als direkte Spritz- und Sprüheinrichtungen für die einzelnen Pasteurisierabteilungen in der Pasteurisieranlage. Das Dach wird dabei von beispielsweise mäanderförmig ausgeformten Blechkörpern 23 gebildet, in denen die Sprühkanäle 24 ausgeformt sind. Diese sind oberhalb mit einer abnehmbaren oder schwenkbaren Deckplatte 25 abgedichtet und weisen beispielsweise seitlich einen gemeinsamen Sprühwasserzulauf auf. Die dachbildenden Sprüheinheiten 22 können wechselweise oder gruppenweise nebeneinander konisch verlaufende Kanäle 24 aufweisen, die jeweils von der breiteren Seite der mit Sprühflüssigkeit beaufschlagbar sind und eine entsprechend gleichmäßige Flüssigkeitsverteilung sicherstellen. Die einzelnen Kanäle 24 weisen Sprühdüsen oder Sprühöffnungen 26 auf, deren Zustand auf einfache Weise durch Öffnen oder Hochklappen der Deckplatten 25 überprüft werden kann. Bei einer solchen Zustandsüberprüfung kann gleichzeitig eine entsprechende Reinigung vorgenommen werden.

Bei mehrstöckigen Pasteurisieranlagen können die in der Anlage befindlichen Sprüheinheiten 22 als seitlich herausziehbar ausgebildet und innerhalb des Gehäuses 18 gelagert sein.

## Patentansprüche

1. Pasteurisieranlage zum Pasteurisieren von Produkten in Behältern in einem Behälterstrom durch aufeinanderfolgende Abschnitte mindestens zum Aufwärmen, Pasteurisieren und Abkühlen mit Hilfe von überschüttender Flüssigkeit mit einem Pasteurgehäuse und darin angeordneten Spritzeinrichtungen, ***dadurch gekennzeichnet, daß*** das Dach (21) des Pasteurgehäuses (18) als Spritzdach ausgebildet ist und sowohl das Dach (21) und auch die Spritzeinrichtungen (22) bildet.

2. Pasteurisieranlage nach Anspruch 1, ***dadurch gekennzeichnet, daß*** das Dach (21) als nebeneinander ausgeformte Sprühkanäle (24) ausgebildet ist.

3. Pasteurisieranlage nach den vorhergehenden Ansprüchen, ***dadurch gekennzeichnet, daß*** die Sprühkanäle (24) nach oben offen und mit einer einzelnen und/oder gemeinsamen Abdeckung (25) verschließbar sind.

4. Pasteurisieranlage nach den vorhergehenden Ansprüchen, ***dadurch gekennzeichnet, daß*** die Abdeckungen (25) abschnittweise auf die Sprühkanäle aufbringbar und von diesen wegklappbar gelagert sind.

5. Pasteurisieranlage nach den vorhergehenden Ansprüchen, ***dadurch gekennzeichnet, daß*** die Abdeckungen (22) selbst die Spritzeinrichtungen bilden und auf einen Rahmen und/oder die Seitenwände als Dachabdeckung aufbringbar sind.

6. Pasteurisieranlage nach den vorhergehenden Ansprüchen, ***dadurch gekennzeichnet, daß*** die Sprühkanäle (24) mäanderförmig ausgebildet sind und wechselweise einzeln oder gruppenweise konisch verlaufen, derart, daß ein erster oder eine erste Gruppe von einer ersten Seite beschickbar und der daneben befindliche entgegengesetzt konisch verlaufende Kanal oder eine Gruppe solcher Kanäle von der zweiten Seite mit Flüssigkeit beschickbar sind.

7. Pasteurisieranlage nach den vorhergehenden Ansprüchen, ***dadurch gekennzeichnet, daß*** der die Spritzöffnung aufnehmende untere Dachteil gerade und das als Abdeckung der Spritzkanäle vorgesehene Oberteil die eigentlichen Sprühkanäle bildet und mit dem unteren Dachteil dichtend verbindbar ist.

## Claims

1. Pasteurizing system for pasteurizing products in containers in a container flow through consecutive sections at least for heating, pasteurizing and cooling by means of overflowing liquid, the said pasteurizing system having a pasteurizer housing and spraying devices disposed therein, **characterised in that** the roof (21) of the pasteurizer housing (18) is the spray roof and forms both the roof (21) and the spraying devices (22).

2. Pasteurizing system according to claim 1, **characterised in that** the roof (21) is in the form of spray ducts (24) that are moulded adjacent one another.

3. Pasteurizing system according to the preceding claims, **characterised in that** the spray ducts (24) are open upwards and are closable by a single and/or common cover (25).

4. Pasteurizing system according to the preceding claims, **characterised in that** the covers (25) can be placed onto the spray ducts in sections and are mounted so as to be pivotal away from the said spray ducts.

5. Pasteurizing system according to the preceding claims, **characterised in that** the covers (22) themselves form the spraying devices and can be placed onto a frame and/or the lateral walls as the roof cover.

6. Pasteurizing system according to the preceding claims, **characterised in that** the spray ducts (24) are meander-shaped and extend alternately in a conical manner individually or in groups in such a manner that a first (duct) or a first group are chargeable with liquid from a first side and the adjacently situated duct that extends conically in an opposite direction or a group of such ducts are chargeable with liquid from the second side.

7. Pasteurizing system according to the preceding claims, **characterised in that** the lower roof portion accommodating the spray opening especially and the upper portion provided as covering of the spray ducts forms the actual spray ducts and is connectable to the lower roof portion in a sealing manner.

## Revendications

1. Installation de pasteurisation pour pasteurise des produits dans des récipients dans un flux de récipients traversant des sections successives destinées au moins à chauffer, pasteuriser et refroidir à l'aide d'un liquide déversé avec un récipient de Pasteur et des dispositifs de pulvérisation placés en lui, **caractérisée en ce que** le toit (21) du récipient de Pasteur (18) est conformé en toit de pulvérisation et forme à la fois le toit (21) et les dispositifs de pulvérisation (22).

2. Installation de pasteurisation selon la revendication 1, **caractérisée en ce que** le toit (21) est conformé en canaux ce pulvérisation (24) formés les uns à côté des autres.

3. Installation de pasteurisation selon l'une des revendications précédentes, **caractérisée en ce que** les canaux de pulvérisation (24) sont ouverts vers le haut et peuvent être fermés par un couvercle (25) distinct et/ou commun.

4. Installation de pasteurisation selon l'une des revendications précédentes, **caractérisée en ce que** les couvercles (25) sont montés par sections d'une manière rapportable sur les canaux de pulvérisation et écartables de ceux-ci.

5. Installation de pasteurisation selon l'une des revendications précédentes, **caractérisée en ce que** les couvercles (22) forment eux-mêmes les dispositifs de pulvérisation et peuvent être rapportés sur un cadre et/ou sur les parois latérales en tant que couvercle de toit.

6. Installation de pasteurisation selon l'une des revendications précédentes, **caractérisée en ce que** les canaux de pulvérisation (24) sont de forme sinueuse et s'étendent en alternance séparément ou par groupes de manière conique, de telle sorte qu'un premier canal ou un premier groupe peut être chargé depuis un premier côté et le canal conique de façon opposée et situé à côté, ou un groupe de tels canaux, peut/peuvent être chargé(s) en liquide depuis le deuxième côté.

7. Installation de pasteurisation selon l'une des revendications précédentes, **caractérisée en ce que** la partie de toit contenant l'ouverture de pulvérisation est droite et la partie supérieure prévue comme couvercle pour les canaux de pulvérisation forme les canaux de pulvérisation proprement dit et peut être reliée hermétiquement à la partie inférieure du toit.
